# EUROPEAN PATENT SPECIFICATION

(11) **EP 2 008 055 B1**
(45) Date of publication and mention of the grant of the patent: **25.08.2010**
(21) Application number: 07712957.5
(22) Date of filing: 23.03.2007
(51) Int. Cl.: F42B 33/06, B60R 21/01

(54) **METHOD OF AND APPARATUS FOR DETONATING PYROTECHNIC DEVICES IN MOTOR VEHICLES**
VERFAHREN UND VORRICHTUNG ZUM ZÜNDEN VON PYROTECHNISCHEN VORRICHTUNGEN IN KRAFTFAHRZEUGEN
PROCÉDÉ ET APPAREIL DE DÉTONATION DE DISPOSITIFS PYROTECHNIQUES DANS DES VÉHICULES MOTORISÉS

(30) Priority: 29.03.2006 GB 0606314
(43) Date of publication of application: 31.12.2008
(73) Proprietor: Intamet Recycling Limited, Daventry, Northants NN11 4NH (GB)
(72) Inventor: EXTON, Mark, David, Leicestershire LE67 4EE (GB)
(74) Representative: Hedges, Martin Nicholas
(86) International application number: PCT/GB2007/001034
(87) International publication number: WO 2007/110594

(56) References cited:
- EP-A- 0 919 782
- WO-A-2005/075934
- DE-A1- 10 233 587
- US-A1- 2004 224 561
- ANONYMOUS: "Technique for automotive air bag disposal" RESEARCH DISCLOSURE, MASON PUBLICATIONS, HAMPSHIRE, GB, vol. 406, no. 25, February 1998 (1998-02), XP007122374 ISSN: 0374-4353

## Description

This invention relates to a method of and apparatus for detonating pyrotechnic devices within a motor vehicle. The invention is particularly useful for fulfilling regulatory requirements in relation to pyrotechnic devices at the end of the life of a motor vehicle.

A typical modem motor vehicle (passenger car or light commercial vehicle) will incorporate a number of pyrotechnic devices. The pyrotechnic devices are in the form of small explosive charges which, upon detonation, inflate safety bags or pretension seat belts. A typical modem premium car will incorporate a significant number (perhaps ten) of such devices. European Union Regulations provide that at the end of the life of a vehicle all pyrotechnic devices must be deployed (that is exploded) or removed from a vehicle. There is at present no convenient method or apparatus for giving effect to this regulation.

WO 2005/075934, upon which the precharacterising clause of claim 1 is based, discloses a detonation control cable comprising a length of cable having a first connector on a first end for mating with a wiring loom connector of a motor vehicle, a second connector on a second end for connecting to a detonation device and means for rendering useless the control cable after a single use.

US 2004/0224561 furthermore discloses a safety device for electrical apparatus which incporates a non repleceable circuit interruptor dispsosed within a housing so as to be inaccessible to a user.

In accordance with the present invention a method of detonating one or more pyrotechnic devices located within a motor vehicle comprises: locating the detonation control unit of the vehicle; removing the vehicle wiring loom connector from the detonation control unit; connecting the said connector to a connector provided at one end of a detonation control cable, the detonation control cable including, in addition to a connector for mating with the wiring loom connector, a length of cable and a second connector for connection to a detonation device, connecting the second connector of the detonation control cable to an external detonation device; and operating the external detonation device to detonate all the pyrotechnic devices within the vehicle via the wiring loom of the vehicle, characterized by the detonating control cable incorporating means for rendering unusable the detonation control cable after a single use, whereby, at the same time as operating the pyrotechnic devices, the external detonating device renders the detonation control cable incapable of further use.

In one embodiment, the detonation control cable incorporates at least one fuse link which, upon use of the detonation control cable to detonate the pyrotechnic devices of a vehicle, would itself be destroyed thereby preventing subsequent use of the cable. However, in a preferred embodiment, the detonation control cable includes a microchip which is configured to operate only once, thereby preventing re-use of the cable in a particularly reliable manner. For example, a control signal is transmitted to the microchip upon initiating the detonation procedure, the microchip detecting the end of the detonation procedure, eg by receipt of a further signal, after which it rejects any further request for detonation.

The advantage of the present invention is that the pyrotechnic devices can safely be detonated at a distance remote from the vehicle by a simple control operation. To set up the control operation an operator will need to locate the detonation control unit and remove the wiring loom connector from it, before connecting that connector to the detonation control cable. The cable is then connected outside of the vehicle, via a standard D type plug, to a suitable detonation control device. The operative can then move to a safe distance from the vehicle and detonate the pyrotechnic devices. Since this operation will itself render the detonation cable unsuitable for future use, there is no incentive for the operative to re-enter the vehicle to recover the cable. He will simply unplug the proximal end of the cable from the external detonation device and jettison the cable with the vehicle. This avoids any risk that the operative will be tempted to re-enter the vehicle in order to recover the cable. Such re-entry of the vehicle immediately after the multiple detonation of pyrotechnic devices is highly undesirable because of the potentially contaminated air within the vehicle.

In a preferred embodiment, the first connector of the connection cable includes a circuit board which provides interconnection between the wires of the cable and the contacts on the connector and which further includes the means for rendering the control cable unusable, in particular the said microchip. The first connector further advantageously includes anti-tamper means to prevent tampering with the circuit board or the connector, for example resin material coated onto the circuit board or the like.

Preferably, a data collection device is included in the system which stores an electronic confirmation of the detonation of all pyrotechnic devices in the vehicle as a compliance record for proof of compliance with regulations relating to destructions of the pyrotechnic devices. The data collection device is preferably located remote from the vehicle, for example connected to the detonation device or between the detonation device and the cable so that it can be retrieved without having to return to the vehicle after detonation. The data collection device may then include continuity means which checks the live pyrotechnic devices present in the system prior to detonation and rechecks after detonation to confirm that all devices have detonated.

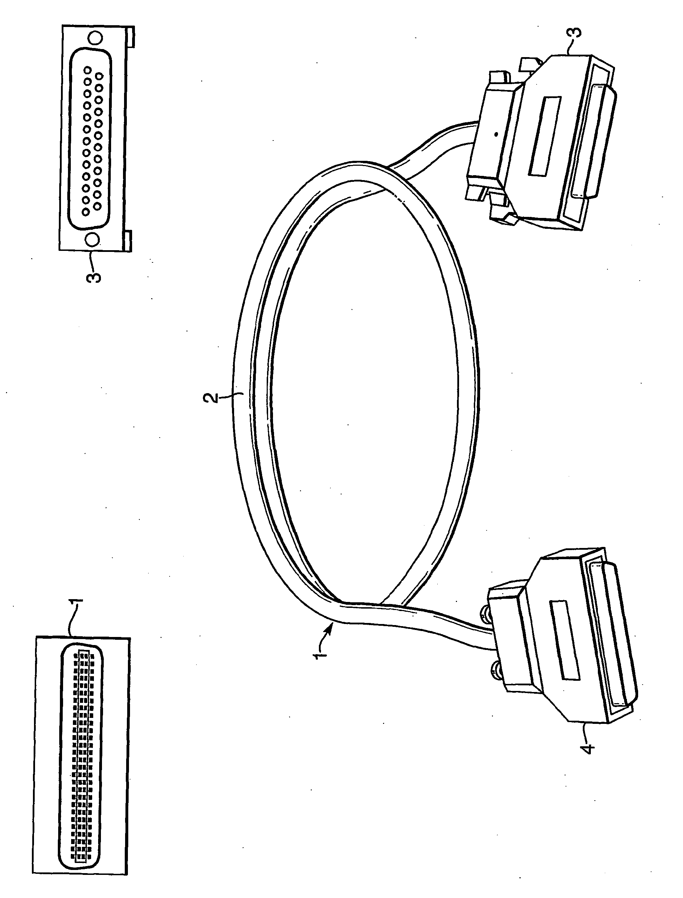

The invention will be better understood from the following description of a preferred embodiment thereof, given by way of example only, reference being had to the accompanying drawing wherein the single figure illustrates a detonation cable for use in the method of the present invention.

The cable 1 illustrated in the drawing includes a multi-conductor flex 2 which interconnects two plugs 3,4. Conveniently, the plug 3, which in use is attached to an external detonation device, can be a standard interface plug, for example a standard D type connector as used in the IT industry. Such a plug provides the necessary relatively large number of individual connections to the detonation device and is readily available at low cost. The plug 4 at the other end of the flex 2 is of a specialist design intended to mate with the connector of the wiring loom of a vehicle which would normally be plugged into the detonation control unit of the vehicle. The exact design of the relevant wiring loom connectors has varied over time and with different vehicle and vehicle accessory manufacturers. However, it is believed that approximately 100 different designs will be sufficient to deal with the vast majority of vehicles being scrapped at any one time. The 100 different designs can be provided by means of 100 different cables each unique to one wiring loom connector. However, it is hoped that by appropriate design of the plug 4 it will be capable of mating with a range of different wiring loom connectors. Additionally or alternatively an adaptor may be provided to connect between the standard interface within the plug 3 and a detonation device so that a single cable together with a suitable adaptor allows mating with a particular make of detonation device.

To utilise the detonation cable 1 an operative will firstly locate the detonation control unit of the vehicle and will disconnect the vehicle wiring loom from that unit. The plug 4 will then be connected to the wiring loom connector. The operator will then leave the vehicle and connect the plug 3 to a suitable interface provided on the exterior of the vehicle. The interface itself will be connected to a detonation device which can be operated at a safe distance from the vehicle to detonate the pyrotechnic devices within the vehicle utilising the cable 1. After detonation, the plug 3 is removed from its interface and the cable jettisoned. This obviates the need for the operative to re-enter the vehicle in order to remove the plug 4 from the wiring loom.

In accordance with the present invention the cable 1 incorporates means for ensuring that it is a single use device. In other words, the cable incorporates means to ensure that once the cable has been used it cannot be re-used. By making the cable a single use device any incentive for the operator to recover the cable for future use is removed and accordingly the operator has no reason to re-enter the vehicle. This is important for safety reasons because of the polluted air and oxygen depletion within a vehicle which has been the subject of multiple pyrotechnic device detonation(s). The single use feature may conveniently be provided by incorporating one or more electrical fuse links within the plug 4. The fuse(s) are designed to blow at the same time or immediately after the detonation signals are sent to the pyrotechnic devices. Such an arrangement can be achieved by, for example, connecting a fuse link to the positive conductor linking to each pyrotechnic device connected to plug 4. Detonation device itself is designed to apply a current sufficient to blow the fuse link immediately after it applies the required current to the pins necessary to detonate the pyrotechnic devices. Accordingly, if any attempt is made to re-use the cable it will be ineffective because the required continuity between the relevant pair of pins of the plug 3 will not be present. Since the electrical resistance of car mounted pyrotechnic devices tends to fall during detonation, by appropriately selecting the fuse link current rating, the application of a predetermined voltage across the series connected pyrotechnic device and fuse will result in a current sufficient to detonate the pyrotechnic device but not initially blow the fuse. As the current rises as a result of declining pyrotechnic device resistance, the fuse will blow.

The plug 4 is preferably rendered tamper resistant by potting with a suitable insulating compound.

The method of the present invention, in the preferred embodiment, comprises the following steps:
1. Site the vehicle at a suitable location for deployment;
2. locate airbag detonation control unit;
3. disconnect wiring loom from detonation control unit;
4. connect wiring loom in vehicle to one plug of disposable detonation lead;
5. pass the other end of lead to outside of vehicle and connect to detonation device;
6. retire to a safe distance and confirm safe working area around vehicle being treated;
7. detonate pyrotechnic devices using detonation device;
8. disconnect lead from detonation device (leaving lead 1 connected to vehicle at plug 4);
9. remove vehicle for further treatment.

If any of the pyrotechnic devices do not deploy the vehicle may be ventilated for a suitable period and the non-deployed devices removed manually and disposed of in accordance with the required regulations.

## Claims

1. A method of detonating one or more pyrotechnic devices located within a motor vehicle comprises: locating the detonation control unit of the vehicle; removing the vehicle wiring loom connector from the detonation control unit; connecting the said connector to a connector (4) provided at one end of a detonation control cable (2), the detonation control cable (2) including, in addition to a connector (4) for mating with the wiring loom connector, a length of cable and a second connector (3) for connection to a detonation device, connecting the second connector (3) of the detonation control cable to an external detonation device; and operating the external detonation device to detonate all the pyrotechnic devices within the vehicle via the wiring loom of the vehicle, **characterized by** the detonating control cable (2) incorporating means for rendering unusable the detonation control cable (2) after a single use, whereby, at the same time as operating the pyrotechnic devices, the external detonating device renders the detonation control cable (2) incapable of further use.

2. A method according to claim 1 wherein the means for rendering unusable the control cable after a single use comprises electrical means for preventing the transmission of a detonation signal along the cable (1) after it has been used once.

3. A method according to claim 1, wherein the electrical means is a microchip which is deactivated at the end of a detonation cycle so as to prevent reuse of the cable.

4. A method according to any of the preceding claims, wherein first connector includes a circuit board which provides interconnection between the wires of the cable and the contacts on the connector and which further includes the means for rendering the control cable (2) unusable, in particular the said microchip.

5. A method according to any of the preceding claims, wherein the first connector (4) further includes anti-tamper means to prevent tampering with the circuit board or the connector.

6. A method according to any of the preceding claims, wherein a data collection device is included in the system which stores an electronic confirmation of the detonation of all pyrotechnic devices in the vehicle as a compliance record for proof of compliance with regulations relating to destructions of the pyrotechnic devices.

## Patentansprüche

1. Verfahren zum Detonieren einer oder mehr pyrotechnischer Vorrichtungen, die in einem Motorfahrzeug vorhanden sind, umfassend: Auffinden der Detonationssteuereinheit des Fahrzeugs; Entfernen des Fahrzeug-Kabelbaum-Steckverbinders von der Detonationssteuereinheit; Anschließen des Steckverbinders an einen Steckverbinder (4), der an einem Ende des Detonationssteuerkabels (2) vorgesehen ist, das Detonationssteuerkabel (2) zusätzlich zu einem Steckverbinder (4) zum Zusammenpassen mit dem Kabelbaum-Steckverbinder eine Länge Kabel und einen zweiten Steckverbinder (3) zum Verbinden mit einer Detonationsvorrichtung enthaltend, Verbinden des zweiten Steckverbinders (3) des Detonationssteuerkabels mit einer externen Detonationsvorrichtung; und Operieren der externen Detonationsvorrichtung zum Detonieren aller pyrotechnischen Vorrichtungen in dem Fahrzeug über den Kabelbaum des Fahrzeugs, **dadurch gekennzeichnet, dass** das Detonationssteuerkabel [P D1] (2) ein Mittel inkorporiert, um das Detonationssteuerkabel (2) nach einer einzigen Verwendung unbenutzbar zu machen, wobei, zur gleichen Zeit wie Operieren der pyrotechnischen Vorrichtungen, die externe Detonationsvorrichtung das Detonationssteuerkabel (2) unfähig für weitere Verwendung macht.

2. Verfahren nach Anspruch 1, wobei das Mittel zum Unbenutzbarmachen des Steuerkabels nach einer einzigen Verwendung ein elektrisches Mittel zum Verhindern der Übertragung eines Detonationssignals über das Kabel (1), nachdem es einmal verwendet wurde, enthält.

3. Verfahren nach Anspruch 1, wobei das elektrische Mittel ein Mikrochip ist, der am Ende eines Detonationszyklus deaktiviert wird, um die Wiederverwendung des Kabels zu verhindern.

4. Verfahren nach einem der vorstehenden Ansprüche, wobei der erste Steckverbinder eine Schaltungsplatte enthält, die Verschaltung zwischen den Drähten des Kabels und den Kontakten des Steckverbinders bereitstellt und die weiterhin das Mittel zum Unbenutzbarmachen des Steuerkabels (2), insbesondere den Mikrochip, enthält.

5. Verfahren nach einem der vorstehenden Ansprüche, wobei der erste Steckverbinder (4) weiterhin ein Manipulationsschutzmittel enthält, um Manipulieren der Schaltungsplatte oder des Steckverbinders zu verhindern.

6. Verfahren nach einem der vorstehenden Ansprüche, wobei eine Datensammelvorrichtung in dem System enthalten ist, die eine elektronische Bestätigung der Detonation aller pyrotechnischen Vorrichtungen in dem Fahrzeug als eine Einhaltungsaufzeichnung als Beweis für Einhaltung von Vorschriften hinsichtlich von Zerstörungen der pyrotechnischen Vorrichtungen speichert.

## Revendications

1. Procédé de détonation d'un ou de plusieurs dispositifs pyrotechniques positionnés dans un véhicule motorisé comprenant les opérations consistant à : repérer l'unité de commande de détonation du véhicule ; enlever le connecteur du faisceau de câblage du véhicule au niveau de l'unité de commande de détonation ; connecter ledit connecteur à un connecteur (4) monté à une extrémité d'un câble de commande de détonation (2), le câble de commande de détonation (2) incluant, en plus d'un connecteur (4) destiné à s'accoupler au connecteur du faisceau de câblage, une longueur de câble et un deuxième connecteur (3) pour être connecté à un dispositif de détonation ; connecter le deuxième connecteur (3) du câble de commande de détonation à un dispositif de détonation externe ; et opérer le dispositif de détonation externe pour faire détoner tous les dispositifs pyrotechniques installés dans le véhicule par l'intermédiaire du faisceau de câble du véhicule, **caractérisé par le fait que** le câble de commande de détonation_{[P D1]} (2) incorpore des moyens permettant de rendre le câble de commande de détonation (2) inutilisable après une seule utilisation, cas dans lequel, au même moment où il actionne les dispositifs pyrotechniques, le dispositif de détonation externe rend le câble de commande de détonation (2) inapte à toute utilisation ultérieure.

2. Procédé selon la revendication 1, les moyens destinés à rendre le câble de commande inutilisable après une seule utilisation comprenant des moyens électriques pour empêcher la transmission d'un signal de détonation le long du câble (1) après qu'il a été utilisé une fois.

3. Procédé selon la revendication 1, les moyens électriques se présentant sous la forme d'une puce laquelle est désactivée à la fin d'un cycle de détonation de sorte à empêcher une réutilisation du câble.

4. Procédé selon l'une quelconque des revendications précédentes, le premier connecteur englobant une carte à circuits laquelle assure l'interconnexion entre les conducteurs du câble et les contacts prévus sur le connecteur, et englobant en outre les moyens destinés à rendre le câble de commande (2) inutilisable, en particulier ladite puce.

5. Procédé selon l'une quelconque des revendications précédentes, le premier connecteur (4) englobant en outre des moyens d'inviolabilité afin de garantir l'intégrité de la carte à circuits ou du connecteur.

6. Procédé selon l'une quelconque des revendications précédentes, un dispositif de collecte de données étant inclus au système qui enregistre une confirmation électronique de la détonation de tous les dispositifs pyrotechniques dans le véhicule à titre de consignation de conformité pour justifier la conformité aux réglementations relatives aux destructions de dispositifs pyrotechniques.
